Europäisches Patentamt

European Patent Office

Office européen des brevets

(19)

(11) Veröffentlichungsnummer : **0 358 897 B1**

# (12) EUROPÄISCHE PATENTSCHRIFT

(45) Veröffentlichungstag der Patentschrift :
27.12.91 Patentblatt 91/52

(51) Int. Cl.⁵ : **B64G 1/50**

(21) Anmeldenummer : **89113538.6**

(22) Anmeldetag : **22.07.89**

(54) Anordnung zum Kühlen von Raumflugkörpern.

(30) Priorität : **27.08.88 DE 3829129**

(43) Veröffentlichungstag der Anmeldung :
**21.03.90 Patentblatt 90/12**

(45) Bekanntmachung des Hinweises auf die
Patenterteilung :
**27.12.91 Patentblatt 91/52**

(84) Benannte Vertragsstaaten :
**FR GB IT**

(56) Entgegenhaltungen :
**EP-A- 0 242 669**
**EP-A- 0 247 493**
**DE-A- 3 718 873**

(73) Patentinhaber : **ERNO Raumfahrttechnik**
**Gesellschaft mit beschränkter Haftung**
**Hünefeldstrasse 1-5**
**W-2800 Bremen 1 (DE)**

(72) Erfinder : **Beckmann, Klaus, Dipl.-Ing.**
**Erlenstrasse 9**
**W-2805 Stuhr 2 (DE)**
Erfinder : **Leidinger, Bernhard, Dr.-Ing.**
**Am Rövekamp 12**
**W-2805 Stuhr 1 (DE)**
Erfinder : **Stümpel, Dieter**
**Zollstrasse 6**
**W-3167 Burgdorf (DE)**

## Beschreibung

Die Erfindung bezieht sich auf eine Anordnung zum Kühlen von Raumflugkörpern durch Wärmeabstrahlung mit einer Radiatorfläche.

Zur Kühlung von Raumfahrzeugen, insbesondere beim Wiedereintritt in die Erdatmosphäre, ist es neben Radiotorflächen auch bekannt, Verdampfungskühler mit einer an der Oberfläche von Wärmetauschern verdampfenden Kühlflüssigkeit zu benutzen. Wie in der Patentanmeldung P 3718873.9 erläutert, wird beim Einsatz solcher Verdampfungskühler angestrebt, die auf Kosten zusätzlicher Nutzlast mitgeführte Kühlflüssigkeit vollständig zu verdampfen, um auf diese Weise einen optimalen Wirkungsgrad für die Kühlung zu erhalten.

Zum Kühlen während der Raumflugphase werden insbesondere bei längeren Aufenthalten die ohne Betriebsstoffe arbeitenden Radiatoren verwendet. Diese müssen, wenn der Raumflugkörper zurückkehren soll, entweder temperaturfest oder absprengbar ausgeführt werden. Als Radiatorwerkstoffe sind daher solche mit guter Wärmeleitfähigkeit und geringer spezifischer Dichte geeignet, und dafür kämen Beryllium oder Aluminium in Betracht, aber Beryllium oder Beryllium-Legierungen haben den Nachteil giftig zu sein, während Aluminium mit seinem relativ geringen Schmelzpunkt problematisch für außen liegende Strukturteile von Raumflugkörpern ist. Stahl wäre zwar temperaturfest und ungiftig, aber wegen der schlechten Wärmeleitfähigkeit müßten derartige Radiatoren besonders dickwandig ausgeführt werden. Dies ist wegen der hohen spezifischen Dichte aber ein Nachteil.

Der Erfindung liegt daher die Aufgabe zugrunde, eine wärmefeste Anordnung zum Kühlen von Raumflugkörpern vorzusehen. Diese Aufgabe ist erfindungsgemäß dadurch gelöst, daß die Radiatorfläche mit einem Verdampfungskühler gekoppelt ist, der aus einem von einem Vorratsbehälter über ein Verteilerrohr versorgten Rohrleitungssystem besteht, das aus in der Außenwand des Raumflugkörpers angeordneten und in Längsrichtung der auftretenden Beschleunigungskräfte verlaufenden Verdampferrohren besteht, und daß die Verdampferrohre in eine Zweiphasen-Abströmleitung münden, welche mit einem verdampfte Kühlflüssigkeit über einen Dampfaustritt freisetzenden und nicht verdampfte Kühlflüssigkeit in den Vorratsbehälter rückführenden Tropfenabscheider in Verbindung steht.

Dabei können Radiator- und Verdampfungsrohre in vorteilhafter Weise aus einem Aluminiumwerkstoff bestehen, wobei der Innendurchmesser und die Anzahl der Verdampferrohre auf den zur erforderlichen Wärmeabfuhr notwendigen Massendurchsatz zu bemessen sind Die Verdampferrohre können darüber hinaus aus dünnen Röhrchen bestehen, während das Verteilerrohr über eine Absperreinrichtung mit dem Vorratsbehälter in Verbindung steht. Für die Kühlflüssigkeit kann normales Wasser benutzt werden.

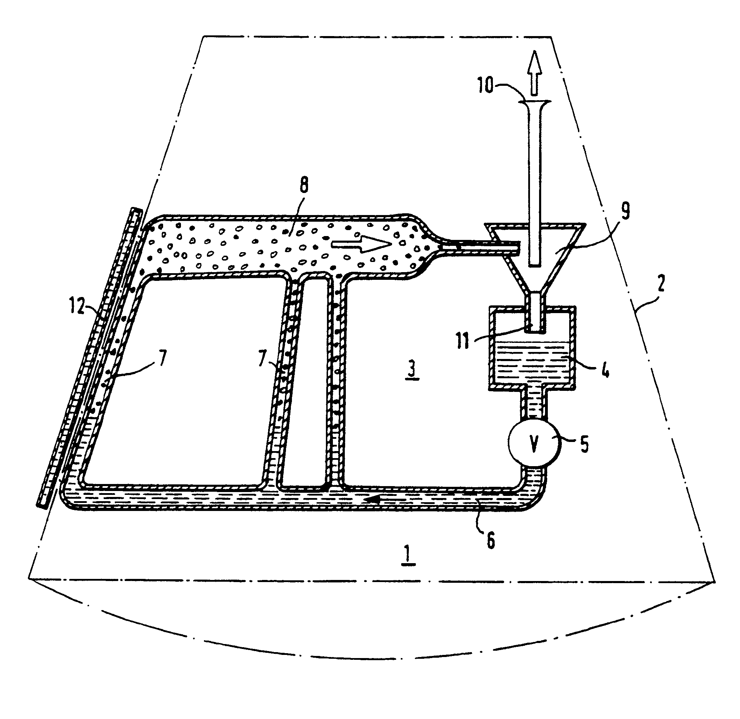

Die Erfindung wird anhand der Zeichnung näher erläutert.

Die Darstellung zeigt einen Raumflugkörper 1, an dessen Außenwand 2 ein Radiator 12 mit einer Kühlanordnung 3 angeschlossen ist. Die innerhalb des Raumflugkörpers angeordnete Kühlanordnung wird von einem Vorratsbehälter 4 versorgt, dessen Ausgang über eine Absperreinrichtung, z.B. ein Ventil 5, zu einem Verteilerrohr 6 führt. Mit dem Verteilerrohr 6 sind eine Vielzahl von Verdampfungsrohren 7 verbunden, welche in eine Zweiphasen-Abströmleitung 8 münden. Die Zweiphasen-Abströmleitung 8 führt zu einem Tropfenabscheider 9, der einen Dampfaustritt 10 aufweist und mit einem Stutzen 11 nicht verdampfte Kühlflüssigkeit in den Vorratsbehälter 4 zurückführt.

Als Kühlflüssigkeit ist es zweckmäßig Wasser zu benutzen, wobei für 5000 KJ abzuführender Wärmeenergie 21 Wasser erforderlich sind. Der Vorratsbehälter sowie die Anzahl und der Innendurchmesser der Verdampferrohre ist dabei auf den notwendigen Massendurchsatz zur Wärmeabführung zu bemessen. Die Verdampferrohre 7 werden parallel zur auftretenden Beschleunigungs- bzw. Verzögerungsrichtung auf der Innenseite mit gutem Wärmekontakt an der Radiatorwand angebracht, so daß durch Verdampfung des durchgeleiteten Wassers den Verdampferrohren 7 und damit von dem sie erhitzenden Radiator Wärme entzogen wird. Auf diese Weise wird die beim Wiedereintritt in den Radiator 12 eindringende Wärme aufgenommen, ohne daß sich dieses nennenswert aufheizt. Der erzeugte Dampf strömt wie durch Pfeile angedeutet im Naturzug den auf die Kühlflüssigkeit wirkenden Beschleunigungskräften entgegen durch die Verdampferrohre. Dabei reißt der Dampf entweder flüssige Kühlflüssigkeit mit, z.B. aufgrund einer Schleppwirkung durch Relativbewegung zwischen Wasser und Dampf oder der Dampf drückt das Wasser direkt aus den Verdampferrohren 7 und zwar durch eine Propfenströmung bei der Wasser und Dampf mit gleicher Geschwindigkeit strömen. Der Dampf und das erhitzte aber nicht verdampfte Wasser erreichen somit über die Zweiphasen-Abströmleitung 8, den Tropfenabscheider 9, in dem der Dampf vom Wasser getrennt wird. Der trockene gesättigte und teilweise auch geringfügig überhitzte Dampf wird über den Dampfaustritt 10 freigesetzt, während das Wasser mit einem Stutzen 11 in den Vorratsbehälter 4 zurückgeführt wird. Durch entsprechende Bemessung des Massendurchsatzes für die abzuführende Wärmeenergie ist es möglich, die Temperatur des zu kühlenden Radiators soweit abzusenken, daß Aluminium für die Verdampferrohre 7 und Radiator benutzt werden kann.

**Patentansprüche**

1. Anordnung zum Kühlen von Raumflugkörpern durch Wärmeabstrahlung mit einer Radiatorfläche, **dadurch gekennzeichnet**, daß die Radiatorfläche (12) mit einem Verdampfungskühler Wärmeleitend gekoppelt ist, der aus einem von einem Vorratsbehälter (4) über ein Verteilerrohr (6) versorgten Rohrleitungssystem besteht, das aus in der Außenwand des Raumflugkörpers (1) angeordneten und entlang einer Komponente der auftretenden Beschleunigungskräfte verlaufenden Verdampferrohren (7) besteht, und daß die Verdampferrohre (7) in eine Zweiphasen-Abströmleitung (8) münden, welche mit einem verdampfte Kühlflüssigkeit über einen Dampfaustritt (10) freisetzenden und nichtverdampfte Kühlflüssigkeit in den Vorratsbehälter (4) rückführenden Tropfenabscheider (9) in Verbindung steht.

2. Anordnung nach Anspruch 1, **dadurch gekennzeichnet**, daß die Verdampferrohre (7) aus einem Aluminiumwerkstoff bestehen und daß die Innendurchmesser und die Anzahl der Verdampferrohre (7) auf den zur erforderlichen Wärmeabfuhr notwendigen Massendurchsatz bemessen sind.

3. Anordnung nach Anspruch 1 oder 2, **dadurch gekennzeichnet**, daß für die Kühlflüssigkeit Wasser benutzt wird.

**Claims**

1. Arrangement for cooling space missiles by means of thermal irradiation with a radiator surface, characterised in that the radiator surface (12) is connected heat conductively with an evaporation cooler which consists of a piping system supplied from a storage vessel (4) via a distributor pipe (6), said piping system consisting of evaporator pipes (7) disposed in the outer wall of the space missile (1) and running along a component of the acceleration forces occurring, and that the evaporator pipes (7) issue into a two-phase exit pipe (8) which is connected to a drip separator (9) releasing evaporated cooling liquid via a vapour outlet (10) and returning non-evaporated cooling liquid into the storage vessel (4).

2. Arrangement according to claim 1, characterised in that the evaporator pipes (7) consist of an aluminium material and that the inner bore and the number of the evaporator pipes (7) are tailored to the material throughput required for the necessary heat dissipation.

3. Arrangement according to claim 1 or 2, characterised in that water is used as the cooling liquid.

**Revendications**

1. Système de refroidissement d'engins spatiaux par radiation de chaleur avec une surface de radiateur, système caractérisé en ce que la surface de radiateur (12) est couplée de façon thermiquement conductrice, avec un refroidisseur à évaporation qui est constitué par un système de canalisations tubulaires alimentées par l'intermédiaire d'un tube répartiteur (6) à partir d'un réservoir (4), et qui est constitué de tubes d'évaporation (7) disposés dans la paroi externe de l'engin spatial (1), et s'étendant le long d'une composante des forces d'accélération intervenant, et en ce que ces tubes d'évaporation (7) débouchent dans une canalisation d'évacuation (8) à deux phases, qui est en communication avec un séparateur de gouttes (9) libérant, par l'intermédiaire d'une sortie de vapeur (10) le liquide vaporisé, et ramenant dans le réservoir (4) le liquide de refroidissement non vaporisé.

2. Système selon la revendication 1, caractérisé en ce que les tubes d'évaporation (7) sont constitués d'un matériau d'aluminium et en ce que le diamètre interne et le nombre des tubes d'évaporation (7) sont déterminés d'après le débit massique nécessaire pour l'évacuation de chaleur requise.

3. Système selon la revendication 1 ou la revendication 2, caractérisé en ce que l'eau est utilisée comme liquide de refroidissement.